# EUROPEAN PATENT APPLICATION

(11) **EP 2 916 563 A1**
(43) Date of publication of application: **09.09.2015**
(21) Application number: 15157556.0
(22) Date of filing: 04.03.2015
(51) Int. Cl.: H04R 1/08

(54) **Microphone**

(30) Priority: 04.03.2014 TW 103203630
(71) Applicant: Jiyonson Co., Ltd., New Taipei City (TW)
(72) Inventor: Tun, Yun-Long, New Taipei City (TW)
(74) Representative: Michalski Hüttermann & Partner Patentanwälte mbB

(57) **Abstract**

A microphone is provided. In addition to sensing the user's voice and transmitting the audio frequency signal to a peripheral device, the microphone further has a plurality of operation buttons for a user to operate another peripheral device. Alternatively, the microphone may have a laser module for generating a laser beam.

## Description

### CROSS-REFERENCES TO RELATED APPLICATIONS

Not applicable.

### BACKGROUND OF THE INVENTION

### Field of the Invention

The present invention relates to a microphone, and more particularly, a microphone with a wireless module and/or a laser module for providing an additional function.

### Descriptions of the Related Art

During lectures, a lecturer often uses a microphone to transmit his or her voice over a long distance or to a specific space via a speaker. In addition to the microphone, the lecturer may also use slides to present the lecture contents. In this case, the lecturer must further hold a laser pen to bring attention to the specified part of the projector image or a wireless controller to operate a device that toggles between the slides. Additionally, when the lecturer desires to record the lecture contents, he or she must further prepare a record pen to record and store the lecture contents.

However, using two or more separate devices (e.g., the microphone, the wireless control device, the laser pen and the record pen) at the same time is very inconvenient for the lecturer. Accordingly, it is important to provide an integrated device that has the functions of a microphone, a wireless controller and/or the laser pen and/or the record pen to reduce the number of devices that must be held by the user.

### SUMMARY OF THE INVENTION

An objective of the present invention is to provide a microphone which has the functions of both a microphone and a wireless controller to reduce the number of separate devices that must be operated at the same time by the user.

To achieve the aforesaid objective, the present invention discloses a microphone. The microphone comprises a housing, a plurality of operation buttons, a sound receiver module, a control module, a first wireless module and a second wireless module. The plurality of operation buttons is disposed on an outer surface of the housing. The sound receiver module is disposed on the housing and configured to sense a sound wave and generate a sensing signal. The control module is disposed in the housing and electrically connected to the sound receiver module and the operation buttons, and is configured to receive the sensing signal to generate an audio frequency signal and generate a control signal according to an operation on each of the operation buttons. The first wireless module is disposed in the housing and electrically connected to the control module, and is configured to transmit the audio frequency signal to a first peripheral device. The second wireless module is disposed in the housing and electrically connected to the control module, and is configured to transmit the control signal to a second peripheral device.

Additionally, another objective of the present invention is to provide a microphone, which has the functions of both a microphone and a laser pen to reduce the number of separate devices when a user must operate more than two separate devices at the same time.

To achieve the aforesaid objective, the present invention discloses a microphone. The microphone comprises a housing, a trigger button, a laser module, a sound receiver module, a control module and a first wireless module. The trigger button is disposed on an outer surface of the housing. The laser module is disposed on the housing, and is configured to generate and project a laser beam when the trigger button is pressed. The sound receiver module is disposed on the housing and is configured to sense a sound wave and generate a sensing signal. The control module is disposed in the housing and electrically connected to the sound receiver module, and is configured to receive the sensing signal to generate an audio frequency signal. The first wireless module is disposed in the housing and electrically connected to the control module and is configured to transmit the audio frequency signal to a first peripheral device.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** is a schematic view of a microphone **1** according to the first embodiment of the present invention;
**FIG. 2A** is a schematic front view of the microphone **1** according to the first embodiment of the present invention;
**FIG. 2B** is a schematic back view of the microphone **1** according to the first embodiment of the present invention;
**FIG. 3** is a schematic view of a microphone **3** according to the second embodiment of the present invention;
**FIG. 4A** is a schematic front view of the microphone **3** according to the second embodiment of the present invention;
**FIG. 4B** is a schematic back view of the microphone **3** according to the second embodiment of the present invention;
**FIG. 5** is another schematic view of the microphone **3** according to the second embodiment of the present invention;
**FIG. 6A** and **FIG. 6B** are schematic views showing another implementation of the microphone **3** according to the second embodiment of the present invention;
**FIG. 7** is a schematic view of a microphone **7** according to the third embodiment of the present invention;
**FIG. 8** is a schematic view of a microphone **8** according to the fourth embodiment of the present invention;
**FIG. 9A** is a schematic front view of the microphone **8** according to the fourth embodiment of the present invention;
**FIG. 9B** is a schematic back view of the microphone **8** according to the fourth embodiment of the present invention;
**FIG. 10** is a schematic view of a microphone **10** according to the fifth embodiment of the present invention;
**FIG. 11A** is a schematic front view of the microphone **10** according to the fifth embodiment of the present invention;
**FIG. 11B** is a schematic back view of the microphone **10** according to the fifth embodiment of the present invention;
**FIG. 12** is a schematic view showing another implementation of the microphone **10** according to the fifth embodiment of the present invention; and
**FIG. 13** is a schematic view of a microphone **13** according to the sixth embodiment of the present invention.

### DESCRIPTION OF THE PREFERRED EMBODIMENT

In the following description, the present invention will be explained with reference to embodiments thereof. However, these embodiments are not intended to limit the present invention to any specific environment, applications or particular implementations described in these embodiments. Therefore, the description of these embodiments is only for the purpose of illustration rather than limitation, and the scope of the present invention shall be governed by the claims. In the following embodiments and the attached drawings, elements unrelated to the present invention are omitted from depiction; and dimensional relationships among individual elements in the attached drawings are illustrated only for ease of understanding, but not to limit the actual scale.

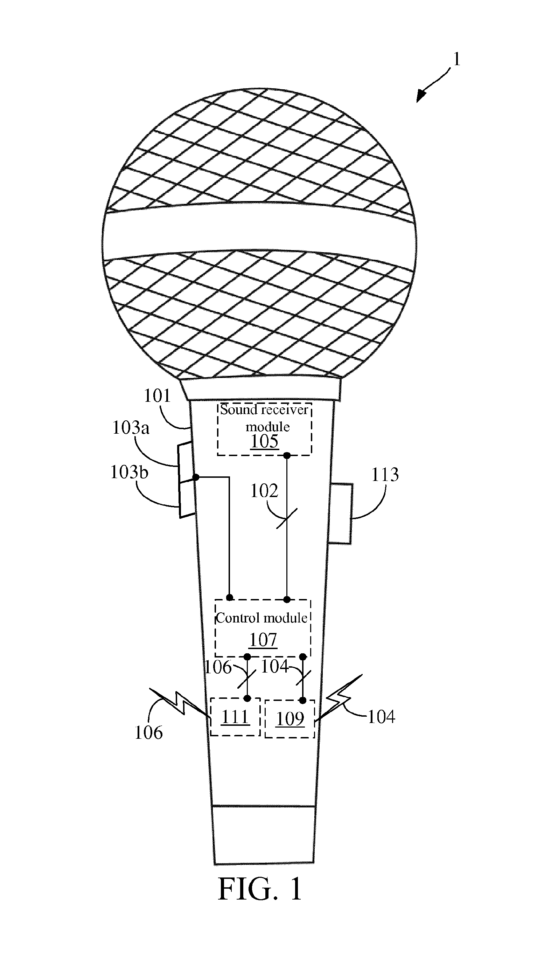

The first embodiment of the present invention is as shown in **FIG. 1****,** which depicts a schematic view of a microphone **1.** The microphone **1** comprises a housing **101,** a plurality of operation buttons **103a** and **103b,** a sound receiver module **105,** a control module **107,** a first wireless module **109,** a second wireless module **111** and a switch **113.** The housing **101** has an outer surface, and defines an inner receiving space. The operation buttons **103a** and **103b** are disposed on the outer surface of the housing **101** for the user to operate. The sound receiver module **105** is mainly disposed in the inner receiving space of the housing **101,** and partly extends for disposal on the outer surface of the housing **101.** In response to the use of the microphone **1** by the user, the sound receiver module **105** senses a sound wave and generates a sensing signal **102.** For example, the sound receiver module **105** may be a capacitive sensor or a moving-coil sensor. Because the sound receiver module **105** is identical to a sound receiver module of a conventional microphone, it will not be further detailed herein.

The control module **107,** the first wireless module **109** and the second wireless module **111** are disposed in the inner receiving space of the housing **101.** The control module **107** is electrically connected to the operation buttons **103** and the sound receiver module **105.** The control module **107** receives the sensing signal **102** to generate an audio frequency signal **104.** Furthermore, the control module **107** generates a control signal **106** according to an operation on the operation button **103a** or the operation button **103b.** In this embodiment, the operation button **103a** and the operation button **103b** are designed to allow the user to toggle up to the previous slide or toggle down to the next slide.

The first wireless module **109** and the second wireless module **111** are electrically connected to the control module **107** respectively. The control module **107** enables the first wireless module **109** to transmit the audio frequency signal **104** to the first peripheral device to achieve a loudspeaker effect. For example, the first peripheral device may be an audio & video (AV) receiving device, a personal computer (PC), or any other device that can be wirelessly connected with the first wireless module **109** of the microphone **1.** The first peripheral device may have a loudspeaker element or be connected to a loudspeaker device to output a sound corresponding to the audio frequency signal **104.** The first wireless module **109** may be an element that conforms to one of the following standards: a 2.4GHz industrial, scientific and medical band standard, a wireless fidelity (Wi-Fi) standard, a Bluetooth system standard, an infrared ray system standard or wireless systems of other frequencies. The first wireless module **109** may be used with a dongle.

Additionally, after the control signal **106** is generated, the control module **107** further enables the second wireless module **111** to transmit the control signal **106** to the second peripheral device. The second peripheral device may be a PC, a tablet computer, a multimedia player, or any other device that has a function of outputting a file including image data (e.g., a slide) and that can be wirelessly connected with the second wireless module **111** of the microphone **1.** Likewise, the second wireless module **111** may also be an element that conforms to one of the following standards: a 2.4GHz industrial, scientific and medical band standard, a wireless fidelity (Wi-Fi) standard, a Bluetooth system standard, an infrared ray system standard or wireless systems of other frequencies. The second wireless module **111** can be used with a dongle.

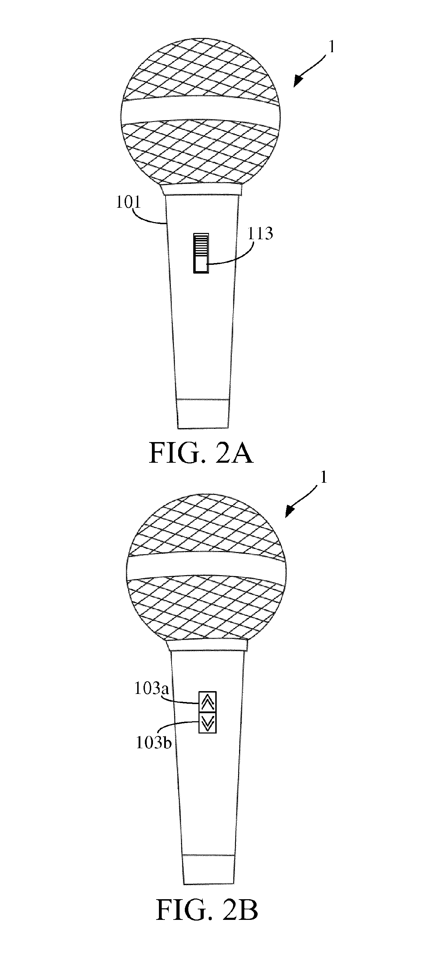

Specifically, **FIG. 2A** depicts a schematic front view of the microphone **1,** and **FIG. 2B** depicts a schematic back view of the microphone **1.** To conform to the ergonomic principle, the operation buttons **103a** and **103b** in this embodiment are disposed on the outer surface of the microphone **1** and opposite to the switch **113.** When the user holds the microphone **1,** he or she may press the operation buttons **103a** and **103b** through the use of an index finger and a middle finger, and change the switch **113** through the use of a thumb. Accordingly, in addition to transmitting the audio frequency signal **104** to the first peripheral device to achieve the loudspeaker effect, the microphone **1** of the present invention may further provide the operation buttons **103a** and **103b** for the user to control the second peripheral device (e.g., to control toggling up or down between the slides).

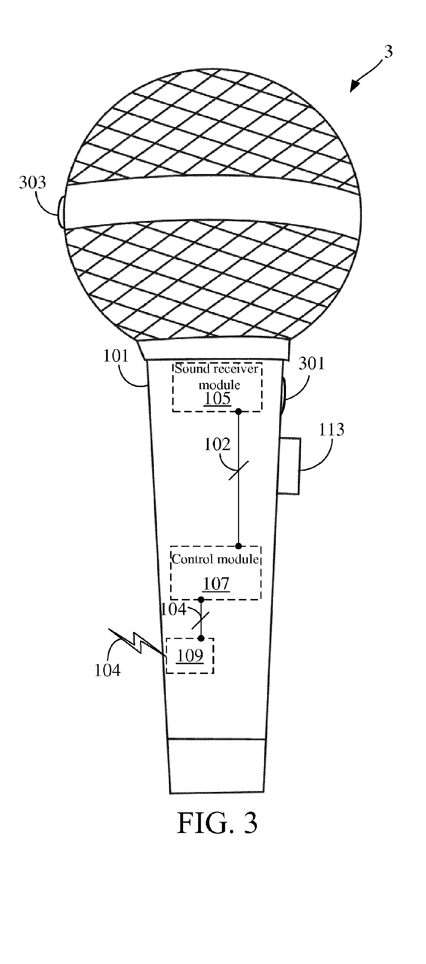

**FIG. 3** depicts a microphone **3** according to the second embodiment of the present invention. As compared to the first embodiment, the microphone **3** of the second embodiment comprises a housing **101,** a sound receiver module **105,** a control module **107,** a switch **113,** a first wireless module **109,** a trigger button **301** and a laser module **303.** The trigger button **301** is disposed on an outer surface of the housing **101** and electrically connected to the laser module **303.** The laser module **303** is disposed on the housing **101,** with main elements thereof being disposed in an inner receiving space of the housing **101** and parts of elements thereof extending for disposal on the outer surface of the housing **101.**

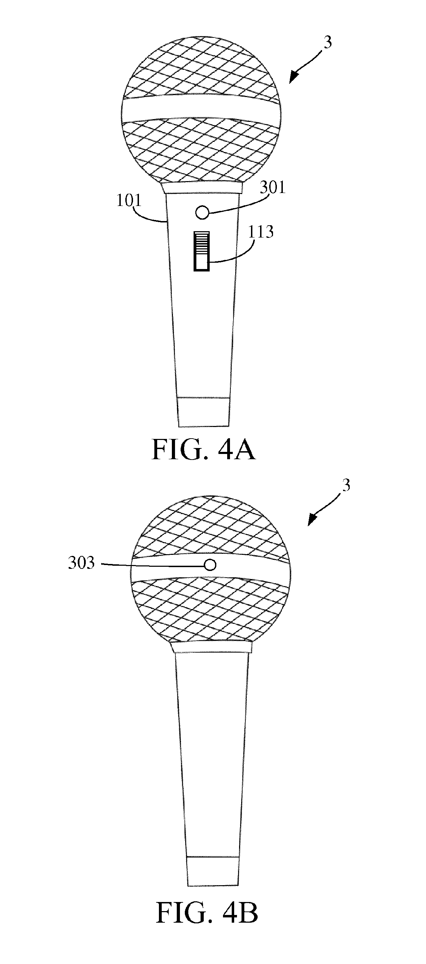

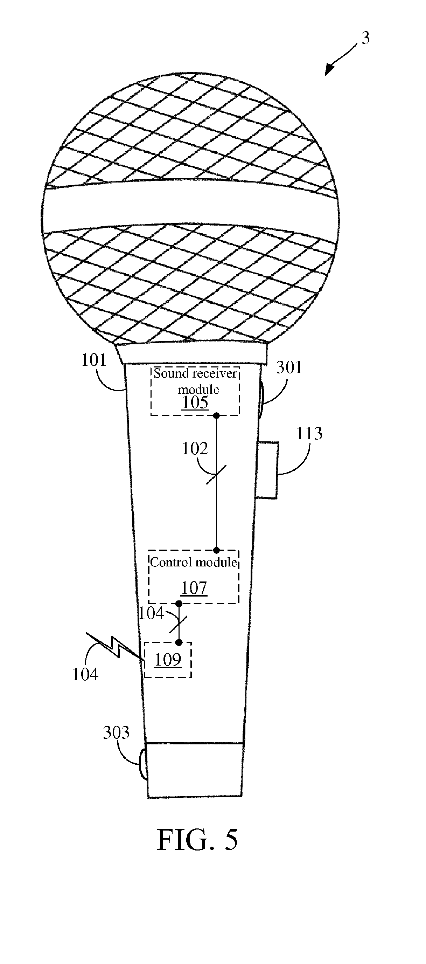

**FIG. 4A** depicts a schematic front view of the microphone **3,** while **FIG. 4B** depicts a schematic back view of the microphone **3.** In this embodiment, the laser module **303** is disposed on the outer surface of the microphone **3** and opposite to the trigger button **301.** A projection aperture of the laser module **303** is disposed on the upper half portion of the microphone **3.** When the user wants to bring attention to key points of the lecture or the slide on the display screen through the use of a laser beam, he or she may press the trigger button **301** to enable the laser module **303** to generate a laser beam and project the laser beam onto the display screen. Additionally, in other implementations, the projection aperture of the laser module **303** may also be disposed on the lower half portion of the microphone **3,** as shown in **FIG.** 5.

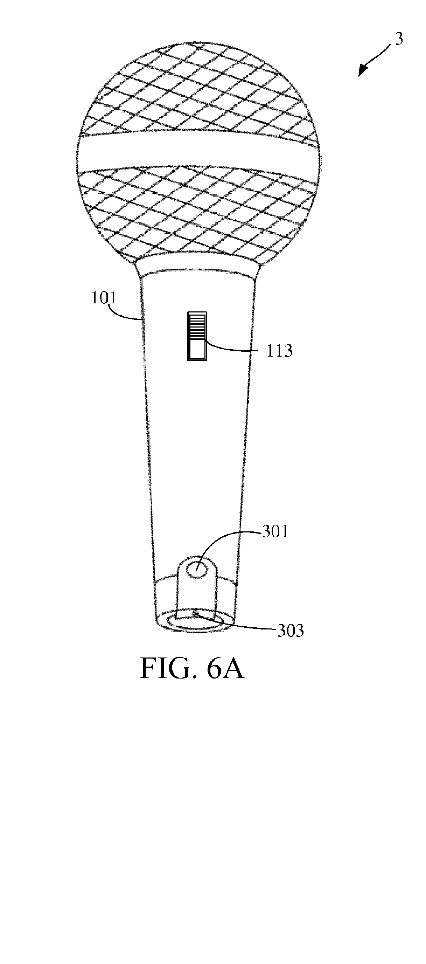

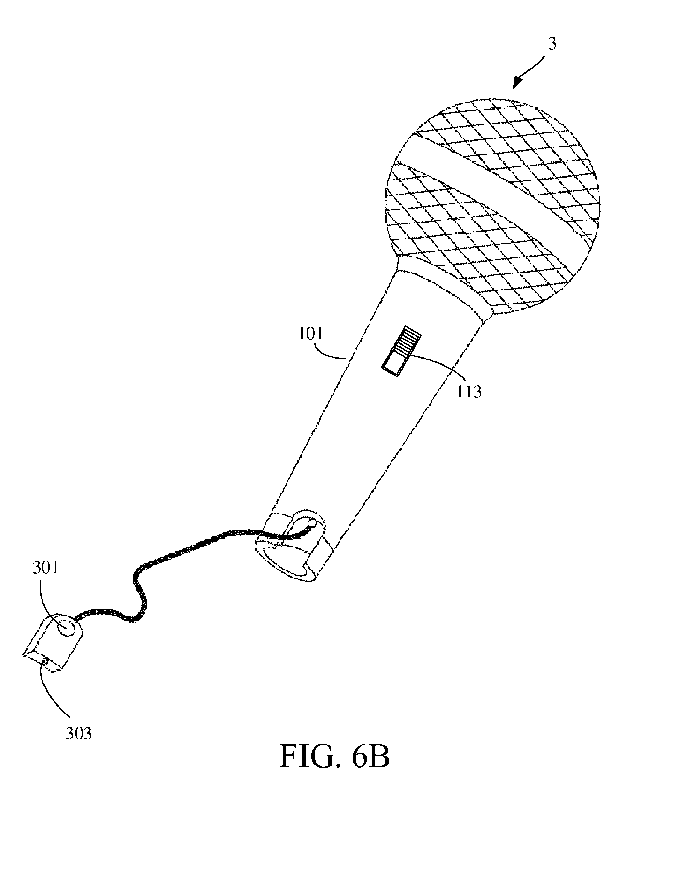

In other embodiments, the laser module **303** may also be a detachable device as shown in **FIG. 6A** and **FIG. 6B****.** With reference to **FIG. 6A****,** the laser module **303** is mounted on the housing **101** of the microphone **3** to form a part of the housing **101.** When the user wants to bring attention to key points of the lecture or the slide on the display screen through the use of a laser beam, he or she may separate the laser module **303** from the body of the microphone **3.** Furthermore, the laser module **303** may be electrically connected to the body of the microphone **3** via a coil of wire to obtain the power supply accordingly, as shown in **FIG. 6B****.** However, the laser module **303** in another implementation may have an independent power supply (e.g., a battery), so it doesn't need to be connected to the body of the microphone **3.** The trigger button **301** is disposed on the laser module **303** and electrically connected to the laser module **303.** By pressing the trigger button **301,** the user may enable the laser module **303** to generate a laser beam and project the laser beam onto the display screen.

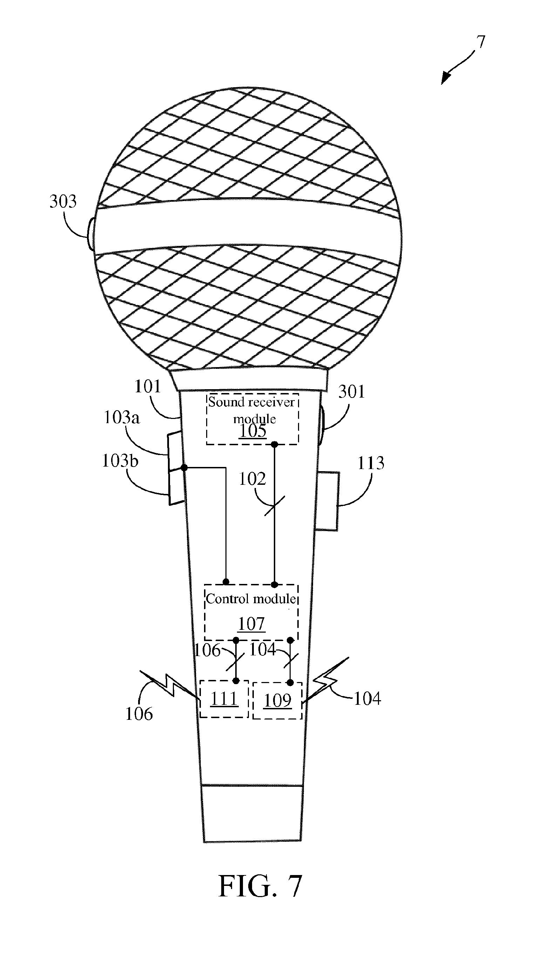

The third embodiment of the present invention is as shown in **FIG. 7****,** which is a schematic view of a microphone **7.** As compared to the first embodiment and the second embodiment, the microphone **7** of the third embodiment comprises all of the elements of the microphone **1** and the microphone **3.** Similarly, to conform to the ergonomics principle, the operation buttons **103a** and **103b** in this embodiment are disposed on the outer surface of the microphone **7** and opposite to the switch **113** and the trigger button **301.** When the user holds the microphone **7,** he or she may press the operation buttons **103a** and **103b** through an index finger and a middle finger, and change over the switch **113** and press the trigger button **301** through a thumb. Accordingly, when the user holds the microphone **7,** in addition to transmitting the audio frequency signal **104** to the first peripheral device to achieve the loudspeaker effect, he or she may further control a second peripheral device (e.g., toggling between the slides) by pressing the operation buttons **103.** By pressing the trigger button **301,** the laser module **303** generates a laser beam and projects the laser beam onto the display screen. Additionally, the laser module **303** of the microphone **7** may also be a detachable device in other embodiments, as shown in **FIGs. 6A****∼6B.**

It should be appreciated that for simplicity of the description, only two operation buttons **103a** and **103b** are illustrated in the above embodiments; however, the microphone of the present invention may have more than two operation buttons or have other elements similar to the operation buttons (e.g., rollers), and positions of the operation buttons may vary depending on the personal habit of the user, so the scope of the present invention is not limited to the specific number or the specific positions of the operation buttons. For example, the microphone of the present invention may further comprise an operation button for adjusting the microphone volume so that the control module **107** can adjust the gain of the audio frequency signal **104** according to the operation of the operation button. Implementations in which the microphone of the present invention has more than two operation buttons or have other elements similar to the operation buttons can be readily appreciated by people of ordinary skill in the art according to the above embodiments, so this will not be further detailed herein.

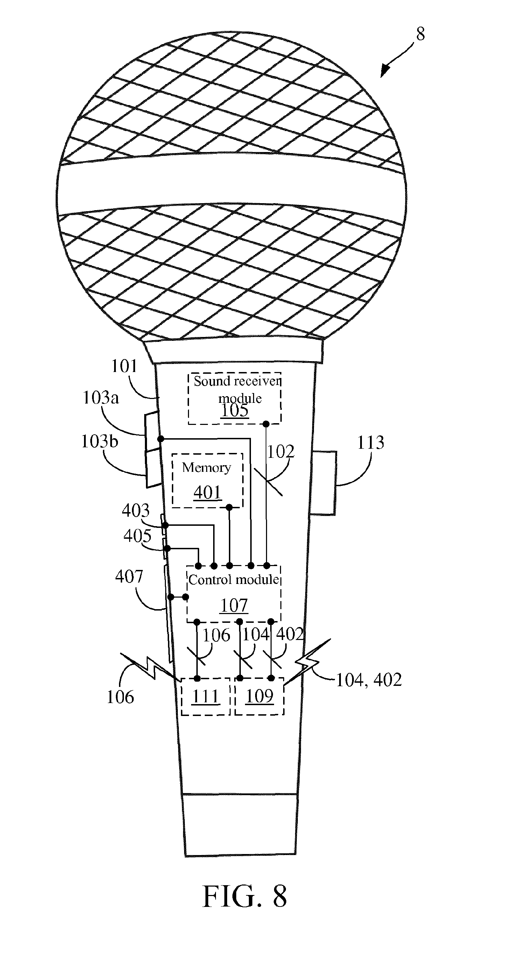

**FIG. 8** depicts a schematic view of a microphone **8** according to the fourth embodiment of the present invention. This embodiment is an extension of the first embodiment, and as compared to the microphone **1** of the first embodiment, the microphone **8** further comprises a memory **401** and a record button **403.** The memory **401** is disposed in the housing **101** of the microphone **8,** while the record button **403** is disposed on the outer surface of the housing of the microphone **8.** The control module **107** is electrically connected to the memory **401** and the record button **403.** When the user wants to record the lecture contents thereof, he or she may press the record button **403;** and then, the control module **107** generates an audio file (not depicted) corresponding to the audio frequency signal **104** according to the operation on the recording button **403** and stores the audio file into the memory **401.**

Additionally, in another embodiment, the microphone **8** may further have a play button **405,** which is disposed on the outer surface of the housing **101** of the microphone **8** and is also electrically connected to the control module **107.** When the user wants to play the stored audio file, he or she may press the play button **405;** and then the control module **107** reads the audio file and generates a record signal **402** according to the operation on the play button **405,** and enables the first wireless module **109** to transmit the record signal **402** to the first peripheral device for playing by the first peripheral device.

Furthermore, the microphone **8** in another embodiment may further have a display panel **407,** which is also disposed on the outer surface of the housing **101** of the microphone **8** and is electrically connected to the control module **107.** The display panel **407** may display a piece of record time information, a piece of battery information and a piece of volume information and various related information, so it can allow the user to know the usage state of the microphone **8** better. Additionally, the display panel **407** in another embodiment may be a touch panel, and functions of the record button **403** and the play button **405** may be integrated into the display panel to achieve functions such as recording and playing through touching.

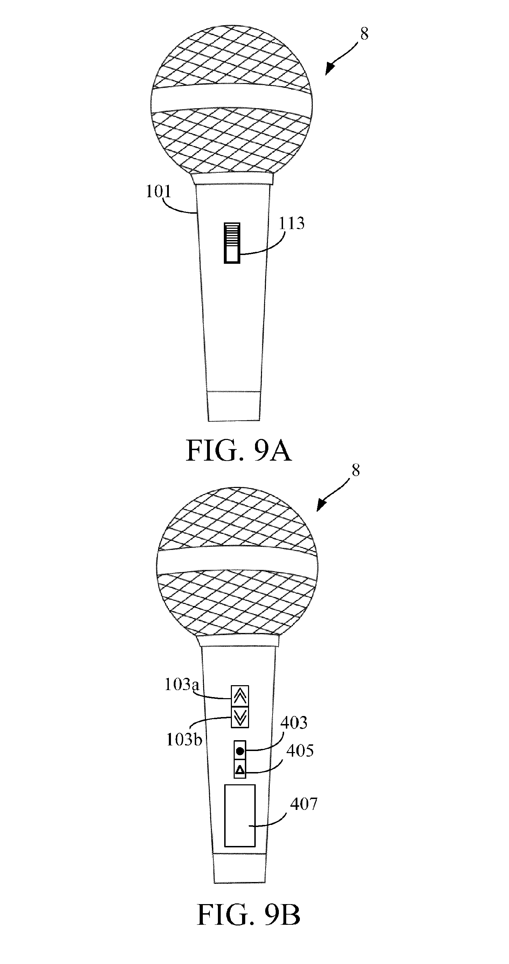

**FIG. 9A** and **FIG. 9B** are a schematic front view and a schematic back view of the microphone **8** respectively. As compared to **FIG. 2A** and **FIG. 2B** of the first embodiment, the microphone **8** of this embodiment further comprises the record button **403,** the play button **405** and the display panel **407** on the outer surface of the housing **101.** In this embodiment, the record button **403,** the play button **405** and the display panel **407** are disposed on the same side as the operation buttons **103a** and **103b.** However, in other embodiments, the positions of the record button **403,** the play button **405** and the display panel **407** may vary depending on the habit of the user. Therefore, any positions of the record button **403,** the play button **405** and the display panel **407** shall fall within the scope of the present invention.

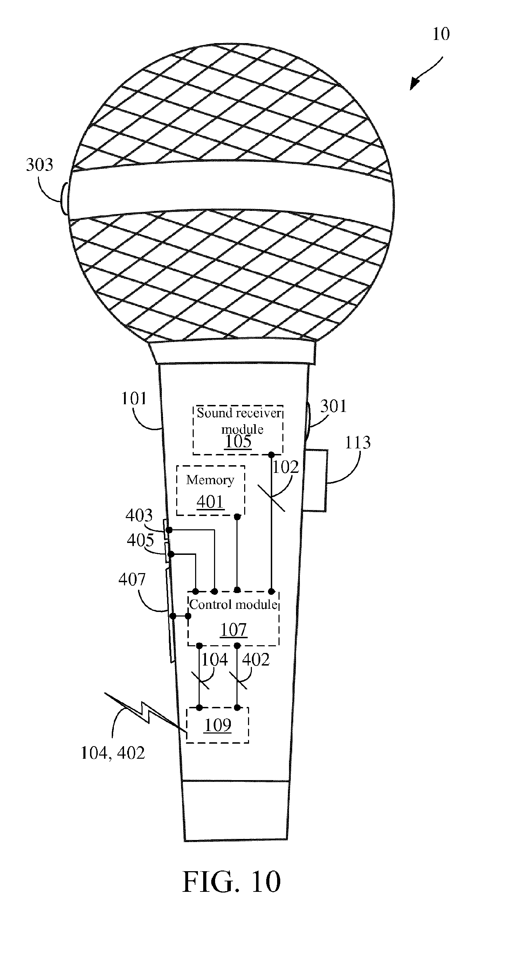

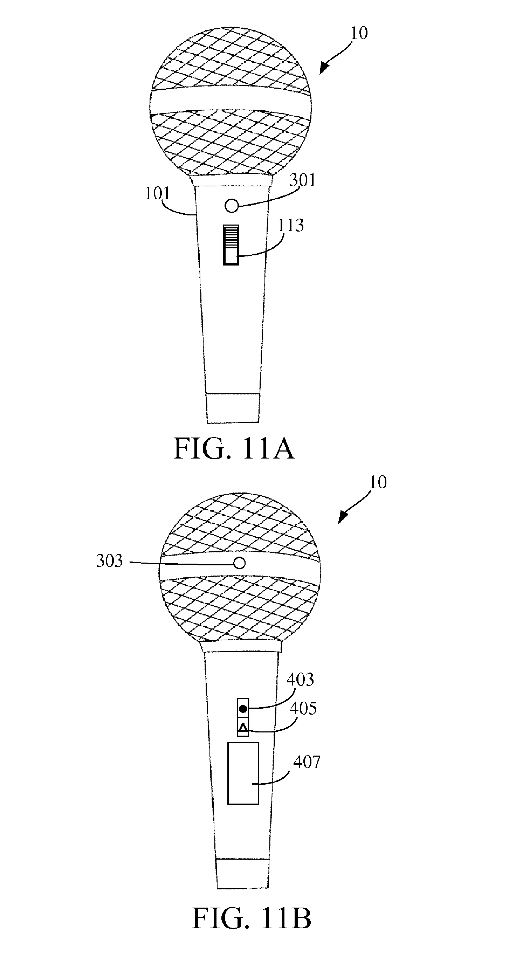

The fifth embodiment of the present invention is as shown in **FIG. 10****,** which is a schematic view of a microphone **10.** **FIG. 11A** and **FIG. 11B** are a schematic front view and back view of the microphone **10** of the present invention respectively. This embodiment is an extension of the second embodiment, and as compared to the second embodiment, the microphone **10** further comprises the memory **401,** the record button **403,** the play button **405** and the display panel **407.** The configurations and functions of the memory **401,** the record button **403,** the play button **405** and the display panel **407** in this embodiment are identical to those in the fourth embodiment, so these will not be further detailed herein. Furthermore,

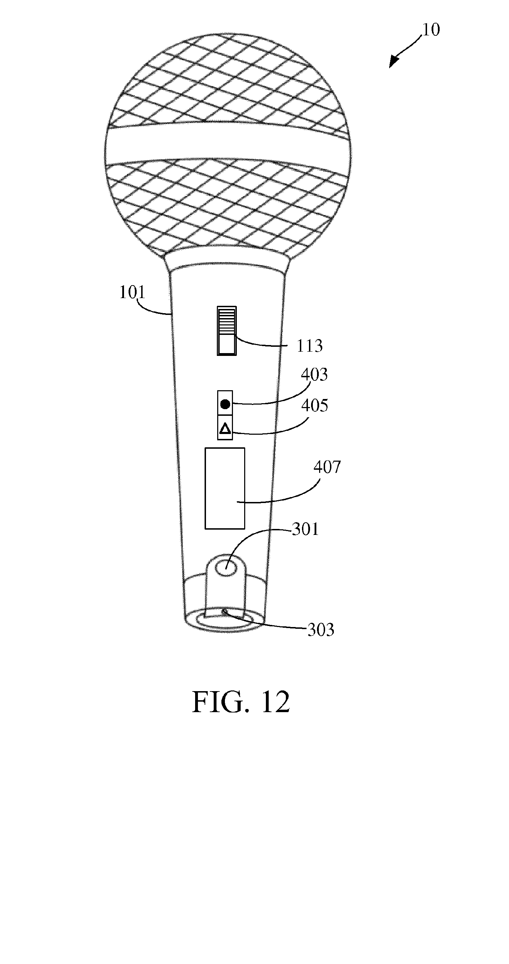

**FIG. 12** is a schematic view showing another implementation of the laser module **303** in the microphone **10** according to the present invention. The laser module **303** is a detachable device.

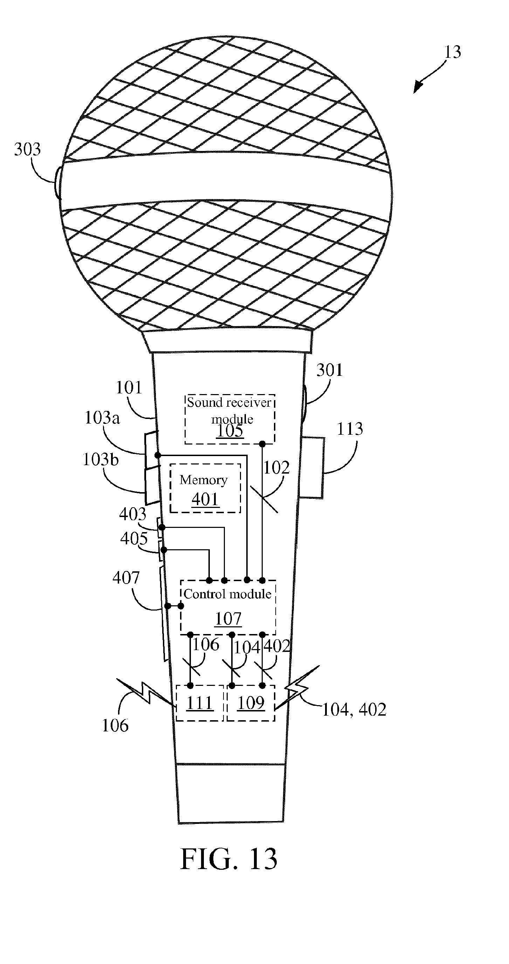

The sixth embodiment of the present invention is as shown in **FIG. 13****,** which is a schematic view of a microphone **13.** As compared to all the embodiments described above, the microphone **13** comprises all the elements of the microphones of the embodiments described above. How this embodiment executes these operations and has these functions can be readily appreciated by people of ordinary skill in the art according to the disclosures of the aforesaid first embodiment to the fifth embodiment, so this will not be further detailed herein.

According to the above descriptions, unlike the conventional microphone, the microphone of the present invention further provides the wireless control, laser projection and record pen functions, so in addition to achieving the loudspeaker effect through the microphone, the user can also control the peripheral devices (e.g., to control the toggling between the slides of the projection screen), project the laser beam and record the lecture contents at the same time. In this way, the microphone of the present invention can provide the user with a more convenient operation mode to reduce the number of separate devices when the user must operate more than two separate devices at the same time.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A microphone comprising:
a housing;
a plurality of operation buttons, being disposed on an outer surface of the housing;
a sound receiver module, being disposed on the housing and configured to sense a sound wave and generate a sensing signal;
a control module, being disposed in the housing and electrically connected to the sound receiver module and the operation buttons, and configured to receive the sensing signal to generate an audio frequency signal and generate a control signal according to an operation on each of the operation buttons;
a first wireless module, being disposed in the housing and electrically connected to the control module, and configured to transmit the audio frequency signal to a first peripheral device; and
a second wireless module, being disposed in the housing and electrically connected to the control module, and configured to transmit the control signal to a second peripheral device.

2. The microphone of claim 1, further comprising a trigger button and a laser module, wherein the trigger button is disposed on the outer surface of the housing, and the laser module is disposed on the housing and configured to generate and project a laser beam when the trigger button is pressed.

3. The microphone of claim 1, further comprising a trigger button and a laser module, wherein the trigger button is disposed on the laser module and electrically connected to the laser module, and the laser module is a detachable device loaded onto the housing to form a part of the housing and configured to generate and project a laser beam when the trigger button is pressed.

4. The microphone of any of claims 1 to 3, further comprising a memory and a record button, wherein the record button is disposed on the outer surface of the housing, the memory is disposed in the housing, and the control module is electrically connected to the record button and the memory and configured to generate an audio file corresponding to the audio frequency signal according to an operation on the recording button and store the audio file in the memory.

5. The microphone of claim 4, further comprising a play button, wherein the play button is disposed on the outer surface of the housing and electrically connected to the control module, and the control module reads the audio file and generates a record signal according to an operation on the play button and enables the first wireless module to transmit the record signal to the first peripheral device.

6. The microphone of claim 5, further comprising a display panel, wherein the display panel is electrically connected to the control module and configured to display a piece of record time information, a piece of battery information and a piece of volume information.

7. The microphone of any of claims 1 to 6, wherein each of the first wireless module and the second wireless module conforms to one of a 2.4GHz industrial, scientific and medical band standard, a wireless fidelity (Wi-Fi) standard, a Bluetooth system standard and an infrared ray system standard.

8. A microphone comprising:
a housing;
a trigger button, being disposed on an outer surface of the housing;
a laser module, being disposed on the housing and electrically connected to the trigger button, and configured to generate and project a laser beam when the trigger button is pressed;
a sound receiver module, being disposed on the housing and configured to sense a sound wave and generate a sensing signal;
a control module, being disposed in the housing and electrically connected to the sound receiver module, and configured to receive the sensing signal to generate an audio frequency signal; and
a first wireless module, being disposed in the housing and electrically connected to the control module and configured to transmit the audio frequency signal to a first peripheral device.

9. The microphone of claim 8, wherein the laser module is a detachable device loaded onto the housing to form a part of the housing, and the trigger button is disposed on the laser module.

10. The microphone of claim 8 or 9, wherein the first wireless module conforms to one of a 2.4GHz industrial, scientific and medical band standard, a wireless fidelity (Wi-Fi) standard, a Bluetooth system standard and an infrared ray system standard.

11. The microphone of any of claims 8 to 10, further comprising a plurality of operation buttons and a second wireless module, wherein the operation buttons are disposed on the outer surface of the housing, the control module is further electrically connected to the operation buttons and configured to generate a control signal according to an operation on each of the operation buttons, and the second wireless module is disposed in the housing, electrically connected to the control module and configured to transmit the control signal to a second peripheral device.

12. The microphone of claim 11, wherein the second wireless module conforms to one of a 2.4GHz industrial, scientific and medical band standard, a wireless fidelity (Wi-Fi) standard, a Bluetooth system standard and an infrared ray system standard.

13. The microphone of any of claims 8 to 12, further comprising a memory and a record button, wherein the record button is disposed on the outer surface of the housing, the memory is disposed in the housing, and the control module is electrically connected to the record button and the memory and configured to generate an audio file corresponding to the audio frequency signal according to an operation on the record button and store the audio file in the memory.

14. The microphone of 13, further comprising a play button, wherein the play button is disposed on the outer surface of the housing and electrically connected to the control module, and the control module reads the audio file, generates a record signal according to an operation on the play button and enables the first wireless module to transmit the record signal to the first peripheral device.

15. The microphone of 14, further comprising a display panel, wherein the display panel is electrically connected to the control module and configured to display a piece of record time information, a piece of battery information and a piece of volume information.
